# EUROPÄISCHE PATENTSCHRIFT

(11) **EP 2 082 350 B1**
(45) Veröffentlichungstag und Bekanntmachung des Hinweises auf die Patenterteilung: **06.08.2014**
(21) Anmeldenummer: 07821070.5
(22) Anmeldetag: 09.10.2007
(51) Int. Cl.: G06F 21/00, H04L 12/58

(54) **VERFAHREN UND SENDEVORRICHTUNG ZUM GESICHERTEN ERSTELLEN UND VERSENDEN EINER ELEKTRONISCHEN NACHRICHT SOWIE VERFAHREN UND EMPFANGSVORRICHTUNG ZUM GESICHERTEN EMPFANGEN UND VERARBEITEN EINER ELEKTRONISCHEN NACHRICHT**
METHOD AND TRANSMITTING DEVICE FOR SECURELY CREATING AND SENDING AN ELECTRONIC MESSAGE AND METHOD AND RECEIVING DEVICE FOR SECURELY RECEIVING AND PROCESSING AN ELECTRONIC MESSAGE
PROCÉDÉ ET DISPOSITIF D'ÉMISSION POUR LA PRODUCTION ET L'ENVOI SÉCURISÉS D'UNE INFORMATION ÉLECTRONIQUE ET PROCÉDÉ ET DISPOSITIF DE RÉCEPTION POUR LA RÉCEPTION ET LE TRAITEMENT SÉCURISÉS D'UNE INFORMATION ÉLECTRONIQUE

(30) Priorität: 20.10.2006 DE 102006049646
(43) Veröffentlichungstag der Anmeldung: 29.07.2009
(73) Patentinhaber: Siemens Aktiengesellschaft, 80333 München (DE)
(72) Erfinder: FRIES, Steffen, 85598 Baldham (DE); SCHEER, Eric, 81735 München (DE)
(86) Internationale Anmeldenummer: PCT/EP2007/060701
(87) Internationale Veröffentlichungsnummer: WO 2008/046764

(56) Entgegenhaltungen:
- EP-A- 1 526 426
- EP-A- 1 674 965
- US-B1- 6 647 409
- "Electronic Mail Security" CRYPTOGRAPHY AND NETWORK SECURITY: PRINCIPLES AND PRACTICE, 1999, Seiten 355-397, XP002212123

## Beschreibung

Verfahren und Sendevorrichtung zum gesicherten Erstellen und Versenden einer elektronischen Nachricht sowie Verfahren und Empfangsvorrichtung zum gesicherten Empfangen und Verarbeiten einer elektronischen Nachricht

Die Erfindung betrifft ein Verfahren und eine Sendevorrichtung zum gesicherten Erstellen und Versenden einer elektronischen Nachricht, sowie ein Verfahren und eine Empfangsvorrichtung zum gesicherten Empfangen und Verarbeiten einer elektronischen Nachricht.

Auf Grund der modernen Kommunikation werden auch vertrauliche Daten, die für eine Firma einen grundlegenden Wert darstellen, computerbasiert verarbeitet. Diese vertraulichen Daten werden oftmals auf tragbaren Rechnern, wie zum Beispiel Laptops oder PDA's (PDA - Personal Digital Assistant) gespeichert.

Um einen Zugriff Dritter auf die vertraulichen Daten zu verhindern, werden diese vertraulichen Daten beispielsweise mit einem Softwareprogramm CryptoEx Security Software einer Firma PGP Corporation verschlüsselt gespeichert. Dabei können vertrauliche Daten mittels geeigneter Verschlüsselung in E-Mail versandt werden.

Diese Softwareprogramme erfüllen jedoch nicht Anforderungen, um Daten zum Beispiel für militärische Anwendungen sicher auf einem Endgerät zu verwahren. Beispielsweise werden im Umfeld von militärischen Anwendungen Gefahrenpotenziale in unerwünschten Softwareprogrammen, wie zum Beispiel Viren oder Trojanischen Pferden oder im Betriebssystem selbst gesehen. Bei einem Betriebssystem kann der Benutzer nicht davon ausgehen, dass vom Hersteller des Betriebssystems keine geheimen Zugänge zu Daten des Betriebssystems existieren, mit denen vertrauliche Daten, zum Beispiel beim Lesen durch einen Anwender, abgegriffen werden können.

Ein Ansatz zur Lösung dieser Anforderung kann durch eine Benutzung von komplett getrennten Systemen erzielt werden. Dabei werden physikalisch getrennte Systeme eingesetzt, bei denen ein Datenaustausch per Hand vorgenommen wird. Dies ist in der Praxis nicht besonders praktikabel, da sowohl ein administrativer Aufwand zur Verwaltung als auch Infrastrukturkosten aufgrund der getrennten Systeme erheblich sind. Ein weiterer Ansatz ist eine Kapselung des Betriebssystems, um so besser in der Lage zu sein, die Kommunikation von bzw. zum Betriebssystem zu kontrollieren. Dies kann durch eine Virtualisierungsschicht geschehen.

Eine Virtualisierungsschicht ermöglicht virtuelle Container, in denen Betriebssysteme eigenständig ausgeführt werden können. Dabei definiert die Virtualisierungsschicht eine Abstraktion der Hardware gegenüber den jeweiligen virtuellen Containern. Hierbei sind folgende Verfahren/Produkte bekannt:
- VM Ware Server (www.vmware.com) : Dieses Produkt ermöglicht unter Anderem die Verwendung von virtuellen Containern, in denen eigene Betriebssysteme laufen. Es kontrolliert jedoch nicht den Zugriff auf Ressourcen der Hardware, wie zum Beispiel den Grafikspeicher.
- XEN (www.xensource.org) : In diesem Open Source Projekt wird eine Virtualisierungsschicht definiert, die eine Abstraktion der Hardware gegenüber dem eigentlichen Betriebssystem, mit dem der Benutzer arbeitet, zur Verfügung stellt.
- Twinsafe (CE Infosys, www.ce-infosys.com) : Dieses Produkt bietet die Möglichkeit, die Daten der virtuellen Container strikt voneinander zu trennen. Um von einem zu einem weiteren Container umzuschalten, muss jedoch das im bisherigen Container laufende Betriebssystem beendet und das in dem weiteren Container zu startende Betriebssystem gebootet werden. Hierbei ist ein schnelles Umschalten zwischen den Containern, das heißt zwischen den Betriebssystemen, nicht möglich.
- Virtual Workstation (Secunet, www.secunet.com): Dieses Produkt bietet virtuelle Container, wobei jedem Container ein Schlüssel zur Verwaltung container-bezogener Daten zugeordnet wird.

Die genannten Produkte ermöglichen eine Verbesserung der Sicherheit bei einem Betrieb eines oder mehrerer Betriebssysteme mit vertraulichen Daten. Jedoch zeigen die genannten Verfahren/Produkte Nachteile auf, die ein Angreifer nutzen kann, um vertrauliche Daten abzugreifen. Insbesondere bei elektronischen Nachrichten ist sowohl beim Erstellen bzw. Lesen als auch beim Versenden bzw. Empfangen dieser elektronischen Nachrichten die potentielle Gefahr gegeben, dass der Angreifer über Kommunikationswege und Kommunikationsprotokolle, wie z.B. LAN (LAN - Local Area Network) oder einem E-Mail-Protokoll SMTP (SMTP - Simple Mail Transfer Protocol), schadhafte Software, wie Würmer oder Trojaner, einzuspeisen und/oder geheime Daten nach Außen übertragen kann.

Eine europäische Patentanmeldung EP 1 526 426 A2 offenbart Methoden, um Sicherheit bei Nutzereingaben dadurch zu gewährleisten, dass ein erstes Host-Betriebssystem zusammen mit einem zweiten Hochsicherheits-Betriebssystem eingesetzt wird, wobei das erste System zumindest teilweise Infrastruktur für das zweite System bereitstellt.

In einem Dokument "electronic Mail Security" CRYPTOGRAPHY AND NETWORK SECURITY: PRINCIPLES AND PRACTICE, 1999, pp 355-397, XP002212123, wird ein Verfahren zur Gewährleistung zur Authentifizierung und Vertraulichkeit, beispielsweise zum Einsatz bei E-Mails beschrieben.

US-Patent US 6 647 409 B1 beschreibt eine Vorgehensweise zum Versenden von Nachrichten mittels einer Software, wobei die Software auf einem tragbaren Computer implementiert ist und die Interaktionen zwischen dem tragbaren Computer und einem Server-Rechner überwacht.

Der Erfindung liegt somit die Aufgabe zugrunde, Verfahren und Vorrichtungen zum gesicherten Erstellen, Versenden, Empfangen und Verarbeiten einer elektronischen Nachricht anzugeben, die eine Erhöhung einer Sicherheit gegenüber Schadsoftware, wie Würmer, Trojaner oder Viren, im Vergleich zum Stand der Technik erreichen.

Die Aufgabe wird durch die unabhängigen Ansprüche gelöst. Sonstige Weiterbildungen der Erfindung sind in den abhängigen Ansprüche wiedergegeben.

Die Erfindung betrifft ein Verfahren zum gesicherten Erstellen und Versenden einer elektronischen Nachricht, bei dem folgende Schritte durchlaufen werden:
- Ausführen einer ersten Applikation in einem gesicherten Betriebssystem zum Erstellen der elektronischen Nachricht, wobei das gesicherte Betriebssystem in einem Container einer Virtualisierungseinheit ausgeführt wird;
- Speichern der elektronischen Nachricht auf einem lediglich durch das gesicherte Betriebssystem und der Virtualisierungseinheit zugreifbaren internen Speichermittel;
- Pollen des internen Speichermittels durch eine zweite Applikation auf ein Vorhandensein der elektronischen Nachricht, wobei die zweite Applikation durch die Virtualisierungseinheit ausgeführt wird;
- Übertragen der elektronischen Nachricht zur zweiten Applikation, falls die elektronische Nachricht vorhanden ist;
- Versenden der elektronischen Nachricht durch die zweite Applikation an einen Empfänger der elektronischen Nachricht.

Mit Hilfe dieses Verfahrens wird erreicht, dass ein Benutzer in einem System, zum Beispiel einem Laptop, neben einem Betriebssystem zum Ausführen von beliebigen Applikationen, ein gesichertes Betriebssystem ablaufen lassen kann, bei dem eine strikte Trennung der Informationsgenerierung, d.h. dem Erstellen der elektronischen Nachricht, und dem Versenden dieser elektronischen Nachricht sowohl trennen als auch den dabei genutzten Kommunikationspfad überwachen kann. Hiermit wird es zum Einen ermöglicht, dass bei der Erstellung der elektronischen Nachricht ein Ausspionieren eines Inhalts dieser elektronischen Nachricht unterbunden wird, und bei der Übertragung dieser elektronischen Nachricht zu der zweiten Applikation ein Abgreifen der elektronischen Nachricht durch einen Angreifer nahezu ausgeschlossen wird. Des Weiteren wird durch das getrennte Erstellen und Versenden der elektronischen Nachricht eine Nachverfolgung des verwendeten Übertragungswegs transparent aufgezeigt, der bei einem offenen Betriebssystem, wie beispielsweise Windows XP, manipuliert werden könnte. Zusätzlich zeigt die genannte Vorgehensweise den Vorteil, dass zum Versenden der elektronischen Nachricht kein standardisierter Übertragungsweg verwendet wird, wodurch eine Manipulation durch Schad-Software, wie Würmer oder Trojaner, nahezu ausgeschlossen wird. Denn heutige Schad-Software-Module erkennen standardisierte Übertragungswege, wie beispielsweise eine standardisierte Schnittstelle zum Versenden und/oder Empfangen von elektronischen Nachrichten, wie beispielsweise POP3 (POP3 - Post Office Box 3), und können diese manipulieren.

Vorzugsweise wird die elektronische Nachricht vor dem Versenden mit einem dem Empfänger zugehörigen Schlüssel verschlüsselt, wodurch ein Angriff auf die elektronische Nachricht zusätzlich erschwert wird. Zudem kann ein Steuerfeld und ein Textfeld der elektronischen Nachrichten getrennt voneinander auf dem internen Speicher abgelegt, durch die zweite Applikation lediglich auf das Vorhandensein des Steuerfelds der elektronischen Nachricht gepollt und durch die zweite Applikation anhand des Steuerfelds ein zum Empfänger der elektronischen Nachricht zugehöriger Schlüssel ermittelt werden. Durch diese Erweiterung wird eine Vereinfachung des Verfahrens erreicht, da zur Ermittlung des einem spezifischen Empfänger zugehörigen Schlüssels lediglich das Steuerfeld ausgewertet werden muss. Dies hat zusätzlich den Vorteil, dass sowohl eine zu übertragende Datenmenge reduziert als auch ein Angriff auf das eine wichtige Information enthaltende Textfeld reduziert wird.

Die Erfindung betrifft ferner ein Verfahren zum gesicherten Empfangen und Verarbeiten einer elektronischen Nachricht, das folgende Schritte durchführt:
- Ausführen einer ersten Applikation in einem gesicherten Betriebssystem zum Verarbeiten der Nachricht, wobei das gesicherte Betriebssystem in einem Container einer Virtualisierungseinheit läuft;
- Pollen eines externen Speichermittels durch eine zweite Applikation auf ein Vorhandensein der elektronischen Nachricht, wobei die zweite Applikation durch die Virtualisierungseinheit ausgeführt wird;
- Übertragen der elektronischen Nachricht bei Vorhandensein von dem externen Speichermittel zu einem lediglich durch das gesicherte Betriebssystem und die Virtualisierungseinheit zugreifbaren internen Speichermittel durch die zweite Applikation;
- Pollen des internen Speichermittels durch die erste Applikation auf ein Vorhandensein der elektronischen Nachricht;
- Übertragen der elektronischen Nachricht von dem internen Speichermittel zu der ersten Applikation durch die erste Applikation zur Verarbeitung der elektronischen Nachricht, falls die elektronische Nachricht auf dem internen Speichermittel vorhanden ist.

Mit Hilfe des Verfahrens zum gesicherten Empfangen und Verarbeiten der elektronischen Nachricht wird erreicht, dass auch elektronische Nachrichten in einer sicheren Art und Weise empfangen und verarbeitet werden können. Insbesondere durch die strikte Trennung des Empfangens und des Verarbeitens der elektronischen Nachricht wird eine Manipulation und/oder Ausspähen des Inhalts der elektronischen Nachricht erheblich erschwert. Dieser Zugriff wird auch dadurch erschwert, dass die Kommunikationswege vom Empfangen bis zum Zustellen der elektronischen Nachricht in einem Endgerät zur ersten Applikation klar definiert und somit nachvollziehbar sind. Gerade bei heutigen Betriebssystemen ist sowohl diese strikte Trennung zwischen Empfangen und Verarbeiten als auch die Nachvollziehbarkeit der Kommunikationswege der elektronischen Nachricht schwer kontrollierbar. Dieser Nachteil wird eben gerade durch das Verfahren zum gesicherten Empfangen und Verarbeiten der elektronischen Nachricht behoben.

In einer Erweiterung werden das externe Speichermittel auf das Vorhandensein einer verschlüsselten elektronischen Nachricht durch die zweite Applikation gepollt, durch diese die verschlüsselte elektronische Nachricht in die elektronische Nachricht entschlüsselt und die elektronische Nachricht zum internen Speichermittel übertragen. Durch Verwendung der verschlüsselten elektronischen Nachricht wird eine Steigerung der Sicherheit erhöht, wodurch ein Angriff erheblich erschwert wird. Wird die elektronische Nachricht ohne Speicherung auf dem externen Speicher direkt auf dem internen Speicher organisiert abgelegt, so wird die Sicherheit weiter erhöht. Denn auf den internen Speicher haben lediglich die Virtualisierungseinheit und das gesicherte Betriebssystem Zugriff.

Des Weiteren umfasst die Erfindung eine Sendevorrichtung zum gesicherten Erstellen und Versenden einer elektronischen Nachricht, die zum Durchführen des Verfahrens zum gesicherten Erstellen und Versenden geeignet ist, wobei die Sendevorrichtung
- ein Mittel umfasst, das geeignet ist, eine erste Applikation zum Erstellen der Nachricht und zum Speichern der elektronischen Nachricht auf einem internen Speichermittel und eine zweite Applikation zum Pollen des internen Speichermittels auf ein Vorhandensein der elektronischen Nachricht, zum Übertragen der elektronischen Nachricht zur zweiten Applikation, falls die elektronische Nachricht vorhanden ist, und zum Versenden der elektronischen Nachricht an einen Empfänger der elektronischen Nachricht, auszuführen;
- eine Virtualisierungseinheit aufweist, wobei die erste Applikation in einem gesicherten Betriebssystem und das gesicherte Betriebssystem in einem Container der Virtualisierungseinheit die zweite Applikation durch die Virtualisierungseinheit ausgeführt werden;
- das interne Speichermittel umfasst, das lediglich durch das gesicherte Betriebssystem und die Virtualisierungseinheit zugreifbar ist.

Mit Hilfe der Sendevorrichtung ist das Verfahren zum gesicherten Erstellen und Versenden der elektronischen Nachricht ausführbar.

Schließlich ist eine Empfangsvorrichtung zum gesicherten Empfangen und Verarbeiten der elektronischen Nachricht Bestandteil der Erfindung, wobei diese Empfangsvorrichtung zum Durchführen des Verfahrens zum gesicherten Empfangen und Verarbeiten der elektronischen Nachricht geeignet ist, wobei die Empfangsvorrichtung
- ein Mittel umfasst, das geeignet ist, eine erste Applikation zum Verarbeiten der Nachricht, zum Pollen eines internen Speichermittels auf ein Vorhandensein der elektronischen Nachricht, und zum Übertragen der elektronischen Nachricht von dem internen Speichermittel zu der ersten Applikation zum Verarbeiten der elektronischen Nachricht, falls die elektronische Nachricht auf dem internen Speichermittel vorhanden ist, und eine zweite Applikation zum Pollen eines externen Speichermittels auf ein Vorhandensein der elektronischen Nachricht und zum Übertragen der elektronischen Nachricht bei Vorhandensein von dem externen Speichermittel zum internen Speichermittel durch die zweite Applikation auszuführen;
- die Virtualisierungseinheit aufweist, wobei die erste Applikation in einem gesicherten Betriebssystem und das gesicherte Betriebssystem in einem Container der Virtualisierungseinheit und die zweite Applikation durch die Virtualisierungseinheit ausgeführt werden;
- das interne Speichermittel umfasst, das lediglich durch das gesicherte Betriebssystem und der Virtualisierungseinheit zugreifbar ist;
- das externe Speichermittel aufweist, das zumindest eine an die erste Applikation zu zustellende Nachricht aufnimmt.

Mit Hilfe dieser Empfangsvorrichtung ist das Verfahren zum gesicherten Empfangen und Verarbeiten der elektronischen Nachricht durchführbar.

Im Rahmen dieser Erfindung wird unter dem Begriff "zum gesicherten Empfangen und Verarbeiten" und "zum gesicherten Erstellen und Versenden der elektronischen Nachricht" verstanden, dass die Verfahren eine Manipulation bei dem Erstellen und Versenden bzw. Empfangen und Verarbeiten der elektronischen Nachricht durch Schad-Software, wie Trojaner oder Würmer, erheblich erschwert. Zudem ist im Rahmen dieser Erfindung unter dem externen Speichermittel ein Speicher zu verstehen, der durch die Virtualisierungseinheit und eine weitere Einheit, wie zum Beispiel einem Kommunikationsserver oder einem Sender, mit einer elektronischen Nachricht beschrieben bzw. gelesen werden kann. Dieser externe Speicher kann ferner auch derart ausgelegt sein, dass die weitere Einheit lediglich schreiben und die Virtualisierungseinheit lediglich von dem externen Speicher lesen kann. Unter der elektronischen Nachricht ist jede Art von Nachricht, wie Text-, Bild-, Musik- oder Steuerinformationen zu verstehen, die jeweils elektronisch übertragen werden können. Unter der Virtualisierungseinheit ist im Weiteren eine Einheit zu verstehen, die Betriebssysteme getrennt von einander, z.B. in Containern, ausführt und Zugriffsrechte auf Hardware und/oder Softwarekomponenten reglementiert, wie beispielsweise einen Zugriff auf bestimmte Partitionen einer Festplatte oder auf externe Schnittstellen. Als gesichertes Betriebssystem ist ein Betriebssystem zu verstehen, das in einem Container der Virtualisierungseinheit ausgeführt wird, und welches beschränkte Zugriffsrechte auf Hardware- und/oder Software-Schnittstellen hat. Ein derartiges gesichertes Betriebssystem kann Linux, MAC-OS oder ein Betriebssysteme der Firma Microsoft umfassen. Ferner können die Verfahren und die Sende- und Empfangsvorrichtung auf einem Rechner, wie beispielsweise einem Laptop oder einem stationären Computer, realisiert und ausgeführt werden. Zudem können die Verfahren in Form eines Computerprogrammprodukts implementiert werden, wobei das Computerprogrammprodukt auf dem Rechner ausführbar ist.

Die Erfindung und ihre Weiterbildungen werden nachfolgend anhand von Zeichnungen näher erläutert.

Es zeigen:
- Figur 1: Eine Sendevorrichtung zum gesicherten Erstellen und Versenden einer elektronischen Nachricht;
- Figur 2: Eine Empfangsvorrichtung zum gesicherten Empfangen und Verarbeiten der elektronischen Nachricht.

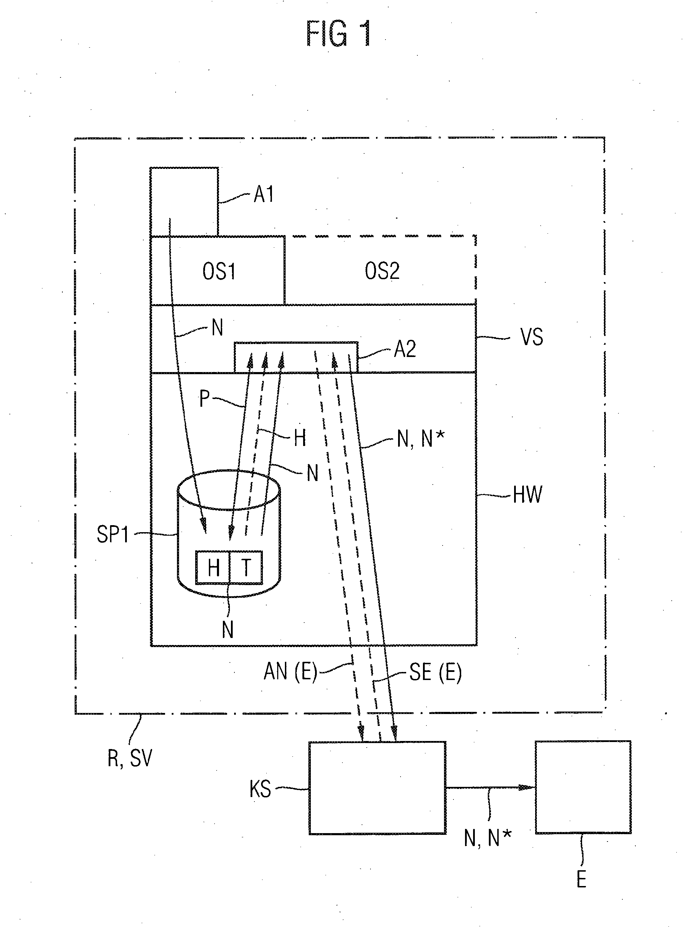

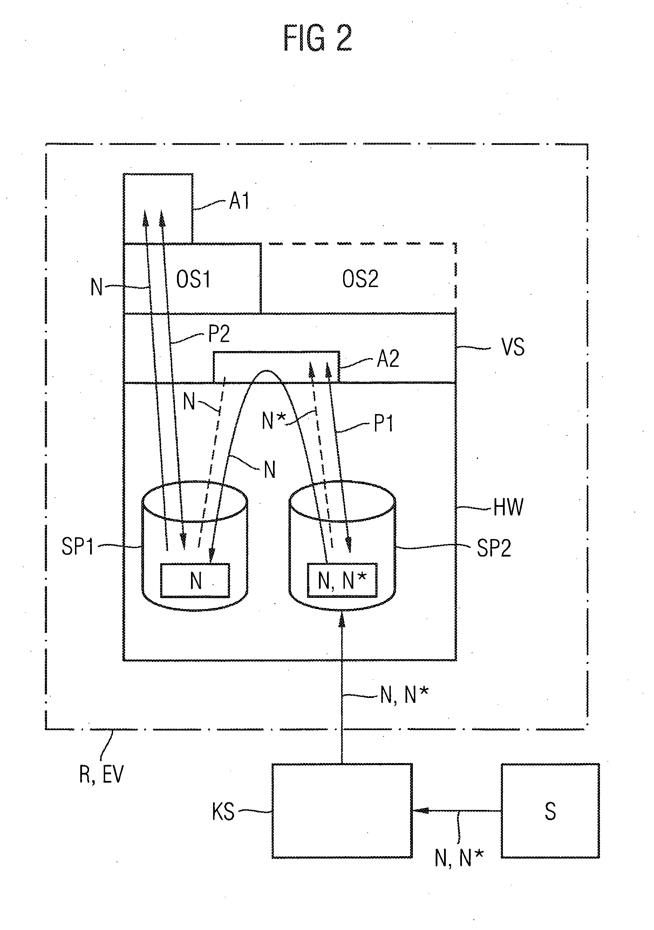

Elemente mit gleicher Funktion und Wirkungsweise sind in den Figuren 1 und 2 mit denselben Bezugszeichen versehen.

Zum Ausführen des Verfahrens zum gesicherten Erstellen und Versenden einer elektronischen Nachricht N wird ein handelsüblicher Laptop R zunächst mit einer Virtualisierungseinheit VS ausgestattet. Wie bereits in der Beschreibungseinleitung ausführlich erläutert, erlaubt die Virtualisierungseinheit ein Kapseln von mehreren in einem jeweiligen Container ausgeführten Betriebssystemen OS1, OS2 und ein Vergeben von Zugriffsrechten auf eine gemeinsame Hardware HW, wie zum Beispiel einer Festplatte oder auf Schnittstellen des Laptops, wie bspw. einem USB-Port (USB - Universal Serial Bus) oder einem LAN-Interface (LAN - Local Area Network), wie bspw. E-thernet.

Zum Ausführen des Verfahrens wird in einem der Container der Virtualisierungseinheit ein gesichertes Betriebssystem OS1 ausgeführt. Das gesicherte Betriebssystem zeichnet sich dadurch aus, dass der Zugriff auf externe Schnittstellen wie dem USB- oder LAN-Interface gesperrt ist. Ferner kann das gesicherte Betriebssystem nur auf ihm direkt zugeordnete Partitionen der Festplatte bzw. separat zugewiesenen Festplatten zugreifen. Zudem können in einer alternativen Weiterbildung Daten auf der dem gesicherten Betriebssystem zugeordneten Partition verschlüsselt abgelegt werden, wobei ein Treiber der Virtualisierungseinheit dem gesicherten Betriebssystem diese Daten in unverschlüsselter Form anbietet bzw. beim Speichern von Daten eine Verschlüsselung durchführt. Das gesicherte Betriebssystem kann beispielsweise ein Windows XP® der Firma Microsoft Corporation sein.

Mit Hilfe einer ersten Applikation A1, die durch das gesicherte Betriebssystem OS1 ausgeführt wird, kann ein Benutzer die elektronische Nachricht erstellen. Dabei umfasst die elektronische Nachricht ein Steuerfeld H, in dem administrative Daten, wie eine Empfängeradresse oder eine Absenderadresse zusammengefasst sind, und ein Textfeld, in dem der Nachrichtentext eingetragen ist. Ferner kann die elektronische Nachricht noch weitere Felder aufweisen, beispielsweise einen oder mehrere Anhänge.

Nach dem Verfassen der elektronischen Nachricht wird diese in einem internen Speichermittel SP1 in Form von einer oder mehreren separaten Dateien abgelegt, wobei bspw. eine erste Datei das Steuerfeld H und eine zweite Datei das Textfeld T umfasst. Das interne Speichermittel SP1 ist als Partition innerhalb der Festplatte des Laptops R angelegt, wobei durch die Virtualisierungseinheit VS ein Zugriff, d.h. Lesen oder Schreiben, nur dem gesicherten Betriebssystem OS1 und der Virtualisierungseinheit VS ermöglicht wird.

Durch eine zweite Applikation A2, die durch die Virtualisierungseinheit VS ausgeführt wird, wird das interne Speichermittel auf ein Vorhandensein der elektronischen Nachricht, insbesondere der das Steuerfeld H umfassenden ersten Datei gepollt. Das Pollen erfolgt entweder in regelmäßigen oder unregelmäßigen Zeitabständen, wie zum Beispiel alle 10 Sekunden. Das Pollen ist in Figur 1 symbolisch durch Doppelpfeil mit einem Bezugszeichen P versinnbildlicht.

Nachdem die zweite Applikation A2 erkannt hat, dass eine neue elektronische Nachricht auf dem internen Speichermittel zur Verfügung steht, wird die elektronische Nachricht N durch die zweite Applikation A2 gelesen und an einen Kommunikationsserver KS weitergeleitet, der zur Übermittlung von elektronischen Nachrichten an den Empfänger E ausgebildet ist. Der Kommunikationsserver ist bspw. als E-Mail Server ausgestaltet.

In einer alternativen Weiterbildung des Verfahrens zum gesicherten Erstellung und Versenden der elektronischen Nachricht wird die elektronische Nachricht N vor dem Versenden verschlüsselt. Zusätzliche Verfahrensschritte für diese alternative Weiterbildung sind in der Figur 1 mit gestrichelten Linien dargestellt. Zur Durchführung der Weiterbildung fordert die zweite Applikation, nach Erkennen des Vorhandenseins der elektronischen Nachricht auf dem internen Speichermittel, zunächst das Steuerfeld H an. In dem Steuerfeld H wird eine Identifikation des Empfängers E extrahiert. Anschließend wird mit Hilfe einer Anfrägenachricht AN der Kommunikationsserver KS angefragt, den zu dem Empfänger E dazugehörigen Schlüssel SE zu liefern. Der Kommunikationsserver arbeitet in dieser Erweiterung als E-Mail Server und verwaltet Schlüssel der Empfänger. Nachdem der angefragte Schlüssel SE des Empfängers E von dem Kommunikationsserver KS der zweiten Applikation A2 zugestellt worden ist, wird die elektronische Nachricht durch die zweite Applikation von dem internen Speichermittel gelesen, mit Hilfe des Schlüssels SE in einer verschlüsselte elektronische Nachricht N* verschlüsselt, und die verschlüsselte elektronische Nachricht N* über den Kommunikationsserver KS an den Empfänger zugestellt.

Anhand der Figur 2 wird das Verfahren zum gesicherten Empfangen und Verarbeiten der elektronischen Nachricht näher erklärt. Zusätzliche Verfahrensschritte für diese alternative Weiterbildung sind in der Figur 2 mit gestrichelten Linien dargestellt. Analog zu den Ausführungen gemäß Figur 1 umfasst der Laptop R die gemeinsame Hardware HW, die Virtualisierungseinheit VS und zumindest das gesicherte Betriebssystem OS1. Die Nachricht eines Senders S wird über den Kommunikationsserver KS in das externe Speichermittel SP2 abgelegt. Im Rahmen dieser Erfindung ist unter dem externen Speichermittel SP2 ein Speicher zu verstehen, der durch die Virtualisierungseinheit und eine weitere Einheit, wie zum Beispiel der Kommunikationsserver KS oder der Sender S, mit einer elektronischen Nachricht N beschrieben werden kann. Im vorliegenden Ausführungsbeispiel ist der externe Speicher als Teil des Laptops R zeichnerisch dargestellt. Im Allgemeinen kann das externe Speichermittel SP2 auch als ein an den Laptop direkt angeschlossenen Speicher oder einen durch ein Netzwerk verbundenen Speicher realisiert werden.

Die zweite Applikation, die durch die Virtualisierungseinheit ausgeführt wird, pollt das externe Speichermittel auf ein Vorhandensein einer neu eingetroffenen elektronischen Nachricht. Dies ist in Figur 2 mit Hilfe eines Doppelpfeils mit einem Bezugszeichen P1 versinnbildlicht. Dabei kann die zweite Applikation das Pollen in regelmäßigen oder unregelmäßigen Zeitabständen durchführen. In einem nachfolgenden Schritt überträgt die zweite Applikation A2 die elektronische Nachricht N von dem externen in das interne Speichermittel. Ferner pollt die erste Applikation A1, die durch das gesicherte Betriebssystem ausgeführt wird, in regelmäßigen oder unregelmäßigen Zeitabständen, den internen Speicher auf das Vorhandensein zumindest einer neu eingetroffenen elektronischen Nachricht. Nachdem diese neu eingetroffene Nachricht N erkannt worden ist, überträgt die erste Applikation zur Verarbeitung der elektronischen Nachricht die elektronische Nachricht von dem internen Speichermittel SP1 zu der ersten Applikation A1. Die erste Applikation verarbeitet beispielsweise die empfangene elektronische Nachricht N derart, dass diese einem Benutzer in formatierter Art und Weise auf einem Bildschirm des Laptops R wiedergegeben wird.

In einer alternativen Weiterbildung des in Figur 2 erläuterten Ausführungsbeispiels wird an Stelle der Nachricht N die verschlüsselte elektronische Nachricht N* durch den Sender S, via dem Kommunikationsserver KS, in das externe Speichermittel SP2 abgelegt. Im Anschluss daran wird aufgrund des Pollens, siehe Bezugszeichen P1, der zweiten Applikation erkannt, dass eine neu übermittelte verschlüsselte elektronische Nachricht N* im externen Speichermittel SP2 vorliegt. Die verschlüsselte elektronische Nachricht N* wird durch die zweite Applikation gelesen und eine Entschlüsselung durchgeführt. Die entschlüsselte elektronische Nachricht N wird dann, ohne Zwischenspeichern auf dem externen Speichermittel SP2, direkt in das interne Speichermittel SP1 geschrieben. Analog zu den vorigen Ausführungen bezüglich Figur 2 pollt die erste Applikation A1 das Speichermittel SP1 auf das Vorhandensein der elektronischen Nachricht N, wobei nach Erkennen der elektronischen Nachricht N diese durch die erste Applikation zur Verarbeitung in die erste Applikation geladen wird.

Einem Fachmann sind, wie in der Einleitung näher ausgeführt, verschiedene Produkte/Verfahren, wie zum Beispiel VM-Ware Server, XEN, Twinsafe oder Virtual Workstation bekannt, mit denen die Virtualisierungseinheit gemäß den Figuren 1 und 2 realisierbar ist.

Das Verfahren zum gesicherten Erstellen und Versenden der elektronischen Nachricht ist durch eine Sendevorrichtung SV implementierbar und realisierbar. Die Sendevorrichtung umfasst dabei folgende Mittel:
- Eine erste Applikation zum Erstellen der Nachricht, wobei die erste Applikation in einem gesicherten Betriebssystem und das gesicherte Betriebssystem in einem Container einer Virtualisierungseinheit ausgeführt werden, und zum Speichern der elektronischen Nachricht auf einem lediglich durch das gesicherte Betriebssystem und der Virtualisierungseinheit zugreifbaren internen Speichermittel;
- Zweite Applikation zum Pollen des internen Speichermittels auf ein Vorhandensein der elektronischen Nachricht, wobei die zweite Applikation durch die Virtualisierungseinheit ausgeführt wird, zum Übertragen der elektronischen Nachricht zur zweiten Applikation, falls die elektronische Nachricht vorhanden ist, und zum Versenden der elektronischen Nachricht an einen Empfänger der elektronischen Nachricht.

Zudem ist das Verfahren zum gesicherten Empfangen und Verarbeiten der elektronischen Nachricht mit Hilfe einer Empfangsvorrichtung EV implementierbar und realisierbar. Die Empfangsvorrichtung verfügt dabei über folgende,Mittel:
- Eine erste Applikation zum Verarbeiten der Nachricht, wobei die erste Applikation in einem gesicherten Betriebssystem und das gesicherte Betriebssystem in einem Container einer Virtualisierungseinheit ausgeführt werden, zum Pollen eines lediglich durch das gesicherte Betriebssystem und der Virtualisierungseinheit zugreifbaren internen Speichermittels auf ein Vorhandensein der elektronischen Nachricht, und zum Übertragen der elektronischen Nachricht von dem internen Speichermittel zu der ersten Applikation zum Verarbeiten der elektronischen Nachricht, falls die elektronische Nachricht auf dem internen Speichermittel vorhanden ist;
- Eine zweite Applikation zum Pollen eines externen Speichermittels auf ein Vorhandensein der elektronischen Nachricht, wobei die zweite Applikation durch die Virtualisierungseinheit ausgeführt wird, und zum Übertragen der elektronischen Nachricht bei Vorhandensein von dem externen Speichermittel zum internen Speichermittel durch die zweite Applikation;

Die Sendevorrichtung und/oder Empfangsvorrichtung können durch Hardware, Software oder aus einer Kombination aus Hard- und Software implementiert und betrieben werden. Die Empfangsvorrichtung und/oder die Sendevorrichtung können dabei in einem tragbaren Endgerät, wie zum Beispiel einem Laptop, PDA (PDA - Personal Digital Assistant) oder Mobiltelefon nach GSM-Standard (GSM - Global System for Mobile Communications), oder einem nicht-tragbaren Gerät, wie Bürorechner, ausgeführt werden.

## Patentansprüche

1. Verfahren zum gesicherten Erstellen und Versenden einer elektronischen Nachricht (N),
**dadurch gekennzeichnet, dass**
folgende Schritte durchlaufen werden:
- Ausführen einer ersten Applikation (A1) in einem gesicherten Betriebssystem (OS1) zum Erstellen der elektronischen Nachricht, wobei das gesicherte Betriebssystem in einem Container einer Virtualisierungseinheit (VS) ausgeführt wird;
- Speichern der elektronischen Nachricht (N) auf einem lediglich durch das gesicherte Betriebssystem (OS1) und die Virtualisierungseinheit (VS) zugreifbaren internen Speichermittel (SP1);
- Pollen des internen Speichermittels (SP1) durch eine zweite Applikation (A2) auf ein Vorhandensein der elektronischen Nachricht (N), wobei die zweite Applikation (A2) durch die Virtualisierungseinheit (VS) ausgeführt wird;
- Übertragen der elektronischen Nachricht (N) zur zweiten Applikation (A2), falls die elektronische Nachricht (N) vorhanden ist;
- Versenden der elektronischen Nachricht (N) durch die zweite Applikation (A2) an einen Empfänger (E) der elektronischen Nachricht (N).

2. Verfahren nach Anspruch 1,
**dadurch gekennzeichnet, dass**
die elektronische Nachricht (N) vor dem Versenden mit einem dem Empfänger (E) zugehörigen Schlüssel (SE) verschlüsselt wird.

3. Verfahren nach Anspruch 2,
**dadurch gekennzeichnet, dass**
- ein Steuerfeld (H) und ein Textfeld (T) der elektronischen Nachricht (N) getrennt von einander auf dem internen Speichermittel (SP1) abgelegt werden,
- durch die zweite Applikation (A2) lediglich auf das Vorhandensein des Steuerfelds (H) der elektronischen Nachricht (N) gepollt wird,
- durch die zweite Applikation (A2) anhand des Steuerfelds (H) ein zum Empfänger (E) der elektronischen Nachricht (N) dazugehöriger Schlüsselt (SE) ermittelt wird.

4. Verfahren zum gesicherten Empfangen und Verarbeiten einer elektronischen Nachricht (N),
**dadurch gekennzeichnet, dass**
folgende Schritte durchlaufen werden:
- Ausführen einer ersten Applikation (A1) in einem gesicherten Betriebssystem (OS1) zum Verarbeiten der Nachricht, wobei das gesicherte Betriebssystem in einem Container einer Virtualisierungseinheit (VS) läuft;
- Pollen eines externen Speichermittels (SP2) durch eine zweite Applikation (A2) auf ein Vorhandensein der elektronischen Nachricht (N), wobei die zweite Applikation (A2) durch die Virtualisierungseinheit (VS) ausgeführt wird;
- Übertragen der elektronischen Nachricht (N) bei Vorhandensein von dem externen Speichermittel (SP2) zu einem lediglich durch das gesicherte Betriebssystem (OS1) und die Virtualisierungseinheit (VS) zugreifbaren internen Speichermittel (SP1) durch die zweite Applikation (A2);
- Pollen des internen Speichermittels (SP1) durch die erste Applikation (A1) auf ein Vorhandensein der elektronischen Nachricht (N);
- Übertragen der elektronischen Nachricht (N) von dem internen Speichermittel (SP1) zu der ersten Applikation (A1) durch die erste Applikation (A1) zur Verarbeitung der elektronischen Nachricht (N), falls die elektronische Nachricht (N) auf dem internen Speichermittel (SP1) vorhanden ist.

5. Verfahren Anspruch 4,
**dadurch gekennzeichnet, dass**
- das externe Speichermittel (SP2) auf das Vorhandensein einer verschlüsselten elektronischen Nachricht (N*) durch die zweite Applikation (A2) gepollt wird,
- durch die zweite Applikation (A2) die verschlüsselte elektronische Nachricht (N*) in die elektronische Nachricht (N) entschlüsselt wird,
- die elektronische Nachricht (N) zu dem internen Speichermittel (SP1) übertragen wird.

6. Verfahren nach Anspruch 5,
**dadurch gekennzeichnet, dass**
die elektronische Nachricht (N) ohne Zwischenspeicherung auf dem externen Speicher (SP2) auf dem internen Speicher (SP1) organisiert abgelegt wird.

7. Sendevorrichtung (SV) zum gesicherten Erstellen und Versenden einer elektronischen Nachricht (N), insbesondere zum Durchführen einer der Ansprüche 1 bis 3,
**dadurch gekennzeichnet, dass**
die Sendevorrichtung
- ein Mittel umfasst, das geeignet ist, eine erste Applikation (A1) zum Erstellen der Nachricht und zum Speichern der elektronischen Nachricht (N) auf einem internen Speichermittel (SP1) und eine zweite Applikation (A2) zum Pollen des internen Speichermittels (SP1) auf ein Vorhandensein der elektronischen Nachricht (N), zum Übertragen der elektronischen Nachricht (N) zur zweiten Applikation (A2), falls die elektronische Nachricht (N) vorhanden ist, und zum Versenden der elektronischen Nachricht (N) an einen Empfänger (E) der elektronischen Nachricht (N) auszuführen;
- eine Virtualisierungseinheit (VS) aufweist, wobei die erste Applikation (A1) in einem gesicherten Betriebssystem (OS1) und das gesicherte Betriebssystem (OS1) in einem Container der Virtualisierungseinheit (VS) und die zweite Applikation (A2) durch die Virtualisierungseinheit (VS) ausführbar ist;
- das interne Speichermittel (SP1) umfasst, das lediglich durch das gesicherte Betriebssystem (OS1) und der Virtualisierungseinheit (VS) zugreifbar ist.

8. Empfangsvorrichtung (EV) zum gesicherten Empfangen und Verarbeiten einer elektronischen Nachricht (N), insbesondere zum Durchführen einer der Ansprüche 4 bis 6,
**dadurch gekennzeichnet, dass**
die Empfangsvorrichtung
- ein Mittel umfasst, das geeignet ist, eine erste Applikation (A1) zum Verarbeiten der Nachricht, zum Pollen eines internen Speichermittels (SP1) auf ein Vorhandensein der elektronischen Nachricht (N), und zum Übertragen der elektronischen Nachricht (N) von dem internen Speichermittel (SP1) zu der ersten Applikation (A1) zum Verarbeiten der elektronischen Nachricht (N), falls die elektronische Nachricht (N) auf dem internen Speichermittel (SP1) vorhanden ist, und eine zweite Applikation (A2) zum Pollen eines externen Speichermittels (SP2) auf ein Vorhandensein der elektronischen Nachricht (N) und zum Übertragen der elektronischen Nachricht (N) bei Vorhandensein von dem externen Speichermittel (SP2) zum internen Speichermittel (SP1) durch die zweite Applikation (A2) auszuführen;
- die Virtualisierungseinheit (VS) aufweist, wobei die erste Applikation (A1) in einem gesicherten Betriebssystem (OS1) und das gesicherte Betriebssystem (OS1) in einem Container der Virtualisierungseinheit (VS) und die zweite Applikation (A2) durch die Virtualisierungseinheit (VS) ausführbar ist;
- das interne Speichermittel (SP1) umfasst, das lediglich durch das gesicherte Betriebssystem (OS1) und die Virtualisierungseinheit (VS) zugreifbar ist;
- das externe Speichermittels (SP2) aufweist, das zumindest eine an die erste Applikation (A1) zu zustellende Nachricht (N) aufnimmt.

## Claims

1. Method for securely creating and sending an electronic message (N),
**characterised in that**
the following steps are run through:
- executing a first application (A1) in a secure operating system (OS1) to create the electronic message, the secure operating system being executed in a virtualisation unit (VS) container,
- storing the electronic message (N) on an internal storage means (SP1) which can only be accessed by the secure operating system (OS1) and the virtualisation unit (VS),
- polling of the internal storage means (SP1) by a second application (A2) for the presence of the electronic message (N), the second application (A2) being executed by the virtualisation unit (VS),
- transmitting the electronic message (N) to the second application (A2) if the electronic message (N) is present,
- sending the electronic message (N) via the second application (A2) to a receiver (E) of the electronic message (N).

2. Method according to claim 1,
**characterised in that**
before sending, the electronic message (N) is encrypted with a key (SE) associated with the receiver (E).

3. Method according to claim 2,
**characterised in that**
- a control field (H) and a text field (T) of the electronic message (N) are stored separately from each other on the internal storage means (SP1)
- the electronic message (N) is polled by the second application (A2) solely for the presence of the control field (H),
- a key (SE) associated with the receiver (E) of the electronic message (N) is determined by the second application (A2) using the control field (H).

4. Method for securely creating and processing an electronic message (N),
**characterised in that**
the following steps are run through:
- executing a first application (A1) in a secure operating system (OS1) to process the message, the secure operating system running in a virtualisation unit (VS) container,
- polling of an external storage means (SP2) by a second application (A2) for the presence of the electronic message (N), the second application (A2) being executed by the virtualisation unit (VS),
- transmitting the electronic message (N), if present, from the external storage means (SP2) to an internal storage means (SP1), which can only be accessed by the secure operating system (OS1) and the virtualisation unit (VS), via the second application (A2),
- polling of the internal storage means (SP1) by the first application (A1) for the presence of the electronic message (N),
- transmitting the electronic message (N) from the internal storage means (SP1) to the first application (A1) via the first application (A1) for processing the electronic message (N) if the electronic message (N) is present on the internal storage means (SP1).

5. Method according to claim 4,
**characterised in that**
- the external storage means (SP2) is polled by the second application (A2) for the presence of an encrypted electronic message (N*),
- the encrypted electronic message (N*) is decrypted into the electronic message (N) by the second application (A2),
- the electronic message (N) is transmitted to the internal storage means (SP1).

6. Method according to claim 5,
**characterised in that**
the electronic message (N) is stored in an organised manner on the internal storage device (SP1) without buffering on the external storage device (SP2).

7. Transmitting device (SV) for securely creating and sending an electronic message (N), in particular for carrying out one of claims 1 to 3,
**characterised in that**
the transmitting device
- comprises a means which is capable of executing a first application (A1) for creating the message and for storing the electronic message (N) on an internal storage means (SP1) and a second application (A2) for polling the internal storage means (SP1) for the presence of the electronic message (N), for transmitting the electronic message (N) to the second application (A2) if the electronic message (N) is present, and for sending the electronic message (N) to a receiver (E) of the electronic message (N),
- comprises a virtualisation unit (VS), it being possible to execute the first application (A1) in a secure operating system (OS1) and the secure operating system (OS1) in a virtualisation unit (VS) container and the second application (A2) via the virtualisation unit (VS),
- comprises the internal storage means (SP1) which can only be accessed by the secure operating system (OS1) and the virtualisation unit (VS).

8. Receiving device (EV) for securely receiving and processing an electronic message (N), in particular for carrying out one of claims 4 to 6,
**characterised in that**
the receiving device
- comprises a means which is capable of executing a first application (A1) for processing the message, for polling an internal storage means (SP1) for the presence of the electronic message (N), and for transmitting the electronic message (N) from the internal storage means (SP1) to the first application (A1) for processing the electronic message (N), if the electronic message (N) is present on the internal storage means (SP1), and a second application (A2) for polling an external storage means (SP2) for the presence of the electronic message (N) and for transmitting the electronic message (N), if present, from the external storage means (SP2) to the internal storage means (SP1) via the second application (A2),
- comprises the virtualisation unit (VS), it being possible to execute the first application (A1) in a secure operating system (OS1) and the secure operating system in a virtualisation unit (VS) container and the second application (A2) via the virtualisation unit (VS),
- comprises the internal storage means (SP1) which can only be accessed by the secure operating system (OS1) and the virtualisation unit (VS),
- comprises the external storage means (SP2) which receives at least one message (N) to be delivered to the first application (A1).

## Revendications

1. Procédé de production et d'envoi sécurisés d'un message électronique (N),
**caractérisé par** le déroulement des étapes suivantes :
- exécution d'une première application (A1) dans un système d'exploitation sécurisé (OS1) pour produire le message électronique, le système d'exploitation sécurisé étant exécuté dans un conteneur d'une unité de virtualisation (VS) ;
- enregistrement du message électronique (N) sur un moyen de mémoire interne (SP1) auquel seuls le système d'exploitation sécurisé (OS1) et l'unité de virtualisation (VS) peuvent accéder ;
- interrogation du moyen de mémoire interne (SP1) par une seconde application (A2) sur la présence du message électronique (N), la seconde application (A2) étant exécutée par l'unité de virtualisation (VS) ;
- transfert du message électronique (N) vers la seconde application (A2) dans le cas où le message électronique (N) est présent ;
- envoi du message électronique (N) à un destinataire (E) du message électronique (N) par la seconde application (A2).

2. Procédé selon la revendication 1, **caractérisé en ce que** le message électronique (N) est codé, avant l'envoi, avec une clé (SE) propre au destinataire (E).

3. Procédé selon la revendication 2, **caractérisé en ce que**
- une zone de commande (H) et une zone de texte (T) du message électronique (N) sont déposées séparément l'une de l'autre sur le moyen de mémoire interne (SP1),
- la seconde application (A2) n'interroge que sur la présence de la zone de commande (H) du message électronique (N),
- la seconde application (A2) détermine, sur la base de la zone de commande (H), une clé (SE) appartenant au destinataire (E) du message électronique (N).

4. Procédé de réception et de traitement sécurisés d'un message électronique (N), **caractérisé par** le déroulement des étapes suivantes :
- exécution d'une première application (A1) dans un système d'exploitation sécurisé (OS1) pour traiter le message, le système d'exploitation sécurisé fonctionnant dans un conteneur d'une unité de virtualisation (VS) ;
- interrogation d'un moyen de mémoire externe (SP2) par une seconde application (A2) sur une présence du message électronique (N), la seconde application (A2) étant exécutée par l'unité de virtualisation (VS) ;
- transfert par la seconde application (A2) du message électronique (N), s'il est présent, du moyen de mémoire externe (SP2) vers un moyen de mémoire interne (SP1) auquel seuls le système d'exploitation sécurisé (OS1) et l'unité de virtualisation (VS) peuvent accéder ;
- interrogation du moyen de mémoire interne (SP1) par la première application (A1) sur une présence du message électronique (N) ;
- transfert du message électronique (N) du moyen de mémoire interne (SP1) vers la première application (A1) par la première application (A1) permettant le traitement du message électronique (N) dans le cas où le message électronique (N) est présent sur le moyen de mémoire interne (SP1).

5. Procédé selon la revendication 4, **caractérisé en ce que**
- le moyen de mémoire externe (SP2) est interrogé par la seconde application (A2) sur la présence d'un message électronique codé (N*),
- la seconde application (A2) décode le message électronique codé (N*) dans le message électronique (N),
- le message électronique (N) est transféré vers le moyen de mémoire interne (SP1).

6. Procédé selon la revendication 5, **caractérisé en ce que** le message électronique (N) est déposé de manière organisée sur la mémoire interne (SP1) sans stockage intermédiaire sur la mémoire externe (SP2).

7. Dispositif émetteur (SV) pour la production et l'envoi sécurisés d'un message électronique (N), notamment pour l'exécution de l'une des revendications 1 à 3, **caractérisé en ce que** le dispositif émetteur
- comprend un moyen qui est adapté pour exécuter une première application (A1) permettant de produire le message et d'enregistrer le message électronique (N) sur un moyen de mémoire interne (SP1) et une seconde application (A2) permettant d'interroger le moyen de mémoire interne (SP1) sur une présence du message électronique (N), de transférer le message électronique (N) vers la seconde application (A2) dans le cas où le message électronique (N) est présent et d'envoyer le message électronique (N) à un destinataire (E) du message électronique (N) ;
- comprend une unité de virtualisation (VS), la première application (A1) pouvant être exécutée dans un système d'exploitation sécurisé (OS1) et le système d'exploitation sécurisé (OS1) pouvant être exécuté dans un conteneur de l'unité de virtualisation (VS) et la seconde application (A2) pouvant être exécutée par l'unité de virtualisation (VS) ;
- comprend le moyen de mémoire interne (SP1) auquel seuls le système d'exploitation sécurisé (OS1) et l'unité de virtualisation (VS) peuvent accéder.

8. Dispositif récepteur (EV) pour la réception et le traitement sécurisés d'un message électronique (N), notamment pour l'exécution de l'une des revendications 4 à 6, **caractérisé en ce que** le dispositif récepteur
- comprend un moyen qui est adapté pour exécuter une première application (A1) permettant de traiter le message, d'interroger un moyen de mémoire interne (SP1) sur une présence du message électronique (N) et de transférer le message électronique (N) du moyen de mémoire interne (SP1) vers la première application (A1) permettant le traitement du message électronique (N) dans le cas où le message électronique (N) est présent sur le moyen de mémoire interne (SP1), et une seconde application (A2) permettant l'interrogation d'un moyen de mémoire externe (SP2) sur une présence du message électronique (N) et le transfert du message électronique (N), s'il est présent, du moyen de mémoire externe (SP2) vers le moyen de mémoire interne (SP1) par la seconde application (A2) ;
- comprend l'unité de virtualisation (VS), la première application (A1) pouvant être exécutée dans un système d'exploitation sécurisé (OS1) et le système d'exploitation sécurisé (OS1) pouvant être exécuté dans un conteneur de l'unité de virtualisation (VS) et la seconde application (A2) pouvant être exécutée par l'unité de virtualisation (VS) ;
- comprend le moyen de mémoire interne (SP1) auquel seuls le système d'exploitation sécurisé (OS1) et l'unité de virtualisation (VS) peuvent accéder ;
- comprend le moyen de mémoire externe (SP2) qui reçoit au moins un message (N) à délivrer à la première application (A1).
